# EUROPEAN PATENT APPLICATION

(11) **EP 4 394 438 A2**
(43) Date of publication of application: **03.07.2024**
(21) Application number: 23217808.7
(22) Date of filing: 19.12.2023
(51) Int. Cl.: G01S 7/481, G01S 7/497

(54) **LIDAR, MOBILE DEVICE AND LIDAR ATTACHMENT DETECTION METHOD**

(30) Priority: 28.12.2022 CN 202211693014
(71) Applicant: Suteng Innovation Technology Co., Ltd., Shenzhen, Guangdong 518000 (CN)
(72) Inventor: Feng, Xi, Shenzhen (CN)
(74) Representative: RGTH

(57) **Abstract**

This application discloses a LiDAR, a mobile device and a LiDAR attachment detection method, where the LiDAR includes a transceiving assembly, a window, a detection module, and a control module. The transceiving assembly is configured to emit an outgoing beam and receive an echo beam. The window is mounted on an optical path corresponding to the transceiving assembly, where part of the outgoing beam emitted by the transceiving assembly forms a reflected beam after being reflected by the window, and the reflected beam includes a specular reflected beam. The detection module is configured to receive the reflected beam and generate a corresponding electrical signal. The control module is electrically connected to the transceiving assembly and the detection module, where the control module is configured to determine whetherthere is an attachment on the window based on the corresponding electrical signal. By operating such design, the LiDAR can effectively detect whether there is the attachment on the window to improve detection accuracy of the LiDAR.

## Description

### TECHNICAL FIELD

This application relates to the technical field of LiDAR, and in particular, to a LiDAR, a mobile device and an LiDAR attachment detection method.

### TECHNICAL BACKGROUND

An LiDAR is a device that emits an outgoing beam and receives an echo beam reflected or scattered back by a target object on an emission optical path of the LiDAR, to measure relevant parameters such as distance, azimuth, height, speed, posture, and even shape of the target object. The LiDAR usually includes components such as a window, an emitter, and a receiver. The emitter is configured to emit the outgoing beam. The receiver is configured to receive the echo beam, and the outgoing beam exits and the echo beam enters the LiDAR through the window.

During operation, the LiDAR is usually easily affected by an external factor, and as a result, an attachment is formed on the window. Because the attachment blocks the optical path, the attachment interferes with normal detection. However, the LiDAR in the related art cannot detect whether there is the attachment on the window, and a measurement result is inevitably inaccurate, which affects detection accuracy of the LiDAR and causes safety hazards when the LiDAR is used in a vehicle.

### SUMMARY

Embodiments of this application provide a LiDAR, a mobile device and a LiDAR detection method for attachment, which can resolve a problem of poor detection accuracy of the LiDAR caused because an attachment on a window interferes with an outgoing beam.

According to a first aspect, an embodiment of this application provides a LiDAR, where the LiDAR includes a transceiving assembly, a window, a detection module and a control module, the transceiving assembly is configured to emit an outgoing beam and receive an echo beam; the window is mounted on an optical path of the transceiving assembly, where part of the outgoing beam emitted by the transceiving assembly is reflected by the window and forms a reflected beam, and the reflected beam includes a specular reflected beam; the detection module is configured to receive the reflected beam and generate a corresponding electrical signal; and the control module is electrically connecting to the transceiving assembly and the detection module, where the control module is configured to: based on the corresponding electrical signal, determine whether there is an attachment on the window.

Based on the LiDAR in this embodiment of this application, the part of the outgoing beam emitted by the transceiving assembly is reflected by the window and forms a reflected beam, the detection module receives the reflected beam to convert an optical signal of the reflected beam into a corresponding electrical signal, and based on the corresponding electrical signal, the control module determines whether there is the attachment on the window, and in this way, the detection module is used to collect the reflected beam of the transceiving assembly, which can effectively determine whether there is the attachment on the window, thereby improving the detection accuracy of the LiDAR.

According to a second aspect, an embodiment of the present application provides a mobile device, where the mobile device includes the foregoing LiDAR.

Based on the mobile device in this embodiment of this application, because the mobile device includes the foregoing LiDAR and the LiDAR has good detection accuracy, the mobile device has good safety performance.

According to a third aspect, an embodiment of this application provides a LiDAR attachment detection method, applied to the foregoing LiDAR, where the detection method includes:
obtaining the electrical signal generated by the detection module; and
if intensity of the electrical signal and a preset threshold satisfy a preset relationship, determining that there is the attachment on the window.

Based on the LiDAR detection method for attachment in the embodiments of this application, obtaining the electrical signal generated by the detection module, the intensity of the electrical signal is compared with the preset threshold, and when the intensity of the electrical signal and the preset threshold satisfy the preset relationship, it can be determined that there is the attachment on the window, which can effectively improve the detection accuracy of the LiDAR.

### BRIEF DESCRIPTION OF THE DRAWINGS

To describe the technical solutions in the embodiments of this application or in the related art more clearly, the following briefly describes the accompanying drawings required for describing the embodiments or the related art. Apparently, the accompanying drawings in the following description show merely some embodiments of this application, and a person skilled in the art may still derive other drawings from these accompanying drawings without creative efforts.
FIG. 1 is a schematic structural diagram of a LiDAR according to an embodiment of this application;
FIG. 2 is a schematic structural diagram of a LiDAR according to another embodiment of this application;
FIG. 3 is a schematic structural diagram of a LiDAR according to yet another embodiment of this application;
FIG. 4 is a schematic structural diagram of a LiDAR according to yet another embodiment of this application;
FIG. 5 is a schematic structural diagram of a LiDAR according to still yet another embodiment of this application;
FIG. 6 is a schematic structural diagram of a LiDAR according to a further embodiment of this application;
FIG. 7 is a schematic structural diagram of a LiDAR according to a still further embodiment of this application;
FIG. 8 is a schematic flowchart of a LiDAR attachment detection method according to an embodiment of this application;
FIG. 9 is a schematic flowchart of a LiDAR attachment detection method according to another embodiment of this application; and
FIG. 10 is a schematic flowchart of a LiDAR attachment detection method according to still another embodiment of this application.

Reference signs: 1 - LiDAR; 10 - transceiving assembly; 20 - window; 30 - detection module; 31 - first detector; 32 - second detector; 33 - optical emitter of first transceiving assembly; 34 - optical receiver of second transceiving assembly; 35 - optical receiver of another transceiving assembly; and 40 - light deflection module.

### DETAILED DESCRIPTION OF EMBODIMENTS

To make the objectives, technical solutions, and advantages of this application more comprehensible, the following further describes this application in detail with reference to accompanying drawings and embodiments. It should be understood that the specific embodiments described herein are merely used to explain this application but are not intended to limit this application.

A LiDAR is a radar system that actively emits a beam to detect characteristics such as position and speed of a target object. From the perspective of working principles, the LiDAR emits an outgoing beam to the target object, then receives an echo beam reflected or scattered back from the target object, and can obtain relevant parameters such as distance, azimuth, height, speed, posture, and even shape of the target object after appropriate processing of the reflected or scattered echo beam. Therefore, the LiDAR can be applied to navigation, obstacle recognition, ranging, speed measurement, autonomous driving and other scenarios of automobiles, robots, logistics vehicles, patrol vehicles and other products.

The LiDAR usually includes components such as a window, an emitter, and a receiver. The emitter is configured to emit the outgoing beam, and the receiver is configured to receive the echo beam. Both the emitter and receiver are on an inner side of the window, and the outgoing beam exits and the echo beam enters the LiDAR through the window.

During use, the LiDAR is usually easily affected by an external factor, and as a result, an attachment is formed on the window. The "external factor" may include, but is not limited to, one or more of temperature, humidity and so on. The "attachment" can be understood as an object that can cause interference to the outgoing beam emitted by the emitter to stop part of the outgoing beam from propagating along a preset optical path (that is, a propagation path of the outgoing beam when there is no attachment on the window). It can be understood that attachments on the window that are caused by different external factors do not all have the same specific design ideas. For example, when the external factor is temperature, due to an excessive temperature difference between an inner side and an outer side of the window, water mist is attached to the window, and at this time, the water mist is a specific design idea of the attachment formed on the window due to the temperature factor. When the external factor is dry sand and dust weather, because sand and dust in the air on the outer side of the window (that is, a side of the window that faces away from the transceiving assembly) have high fluidity, the sand and dust are attached to the outer side of the window, and at this time, the sand and dust are a specific design idea of attachments formed on the window due to the factor of the dry sand and dust weather. When the external factor is humid rainy weather, because rainwater in the air on the outer side of the window has high fluidity, water stains are attached to the outer side of the window, and at this time, the water stains are a specific design idea of attachments formed on the window due to the factor of the humid rainy weather. It should be noted that a specific position of the attachment on the window is not limited. It can be understood that specific positions of attachments with the same or different specific design ideas on their respective windows are not all the same. For example, when the attachment is water mist, if temperature on the inner side of the window (that is, a side of the window that faces toward the transceiving assembly) is higher than temperature on the outer side of the window, water mist is formed on the inner side of the window; and conversely, if temperature on the inner side of the window is lower than temperature on the outer side of the window, water mist is formed on the outer side of the window.

When there is no attachment on the window, most of the outgoing beams emitted by the emitter can pass through the window to be directed to the target object, and form echo beams after being reflected or scattered by the target object, to be transmitted to the receiver. When there is the attachment on the window, because the attachment blocks the outgoing beam, the attachment interferes with the outgoing beam emitted by the emitter.

However, the LiDAR in the related art cannot detect whether there is the attachment on the window, and if the LiDAR still detects the target object by using the outgoing beam interfered with by the attachment, an obtained measurement result is inevitably inaccurate, which affects detection accuracy of the LiDAR and causes safety hazards.

Therefore, how to ensure that the LiDAR can effectively detect whether there is the attachment on the window to improve the detection accuracy of the LiDAR has become a problem that urgently needs to be resolved.

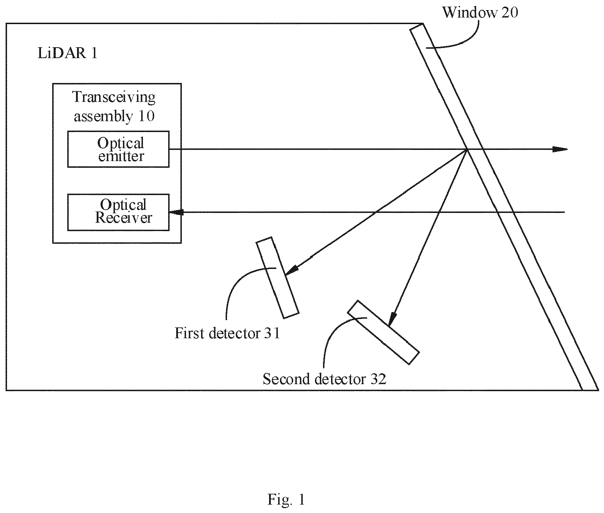

To resolve the foregoing technical problem, referring to FIG. 1, a first aspect of this application provides a LiDAR 1 that can effectively determine whether there is the attachment on the window 20 to improve the detection accuracy of the LiDAR 1.

The LiDAR 1 includes a transceiving assembly 10, a window 20, a detection module 30 and a control module (not shown in the figure). The transceiving assembly 10 is configured to emit an outgoing beam and receive an echo beam. The window 20 is mounted on an optical path corresponding to the transceiving assembly 10, where part of the outgoing beam emitted by the transceiving assembly 10 forms a reflected beam after being reflected by the window 20, and the reflected beam includes a specular reflected beam. The detection module 30 is configured to receive the reflected beam and generate a corresponding electrical signal. The control module is electrically connected to the transceiving assembly 10 and the detection module 30, where the control module is configured to: based on the corresponding electrical signal, determine whether there is an attachment on the window 20.

A specific structure of the LiDAR 1 is described below with reference to FIGs. 1-7.

As shown in FIG. 1, the LiDAR 1 includes a transceiving assembly 10, a window 20, a detection module 30, and a control module.

The transceiving assembly 10 is used as a component that can be used for emitting an outgoing beam and receiving an echo beam in the LiDAR 1.

The transceiving assembly 10 includes an optical emitter and an optical receiver. The optical emitter is configured to emit the foregoing outgoing beam to the target object in the detection region. The optical receiver is configured to receive the foregoing echo beam from the target object, and the echo beam is formed after the outgoing beam is reflected or scattered by the target object. In some embodiments, the optical emitter can be a photodiode (PD), and the photodiode converts a continuous analog electrical signal into an optical signal corresponding to the outgoing beam. The optical receiver can be an avalanche photodiode (APD), and the avalanche photodiode converts the optical signal corresponding to the received echo beam into a continuous analog electrical signal and transmits the continuous analog electrical signal to the control module (described below).

For LiDARs 1 of different design ideas, relative position relationships between the optical emitters and the optical receivers are also not all the same. For example, when the LiDAR 1 is a mechanical LiDAR or a flash solid-state LiDAR, the optical emitter and the optical receiver are arranged abaxially, that is, an optical path of the outgoing beam emitted by the optical emitter is different from an optical path of the echo beam received by the optical receiver. An angle between the optical path of the outgoing beam emitted by each optical emitter and the window 20 is a specific fixed angle, and an angle between the optical path of the echo beam received by each optical receiver and the window 20 is also a specific fixed angle. When the LiDAR 1 is scanning with a rotating-mirror and/or a microelectromechanical system (MEMS) galvanometer, the optical emitter and the optical receiver are coaxially arranged, that is, the optical path of the outgoing beam emitted by the optical emitter is the same as the optical path of the echo beam received by the optical receiver (the optical paths overlap in space). Because the optical path is deflected by the rotating mirror and/or the galvanometer to scan, the optical path of the outgoing beam emitted by each optical emitter and the window 20 form multiple angles, and the optical path of the echo beam received by each optical receiver and the window 20 also form multiple angles.

On the one hand, the window 20 is used as a window of the LiDAR 1 to allow the outgoing beam emitted by the optical emitter and the echo beam received by the optical receiver to pass through. On the other hand, the window 20 is used as a part of a housing of the LiDAR 1 to protect components such as the optical emitter and the optical receiver. A specific structure of the window 20 is not limited herein, and can be properly designed by a designer based on an actual need. A specific manufacture material of the window 20 is not limited herein, and can be properly selected by the designer based on an actual need. It can be understood that for LiDARs 1 with different design ideas, specific structures and specific manufacture materials of the windows 20 are also not all the same.

The window 20 is mounted on the optical path of the transceiving assembly 10, that is, the outgoing beam emitted by the optical emitter of the transceiving assembly 10 passes through the window 20, and the echo beam received by the optical receiver of the transceiving assembly 10 also passes through the window 20.

The part of the outgoing beam emitted by the optical emitter of the transceiving assembly 10 is reflected by the window 20 and forms a reflected beam, that is, the outgoing beam emitted by the optical emitter of the transceiving assembly 10 includes part of the outgoing beam that passes through the window 20 and is emitted outside the LiDAR 1, and includes the other part of the outgoing beam that does not pass through the window 20 but is reflected on the window 20 and forms the foregoing reflected beam. Reflected beams include a specular reflected beam and a diffuse reflected beam. When there is no attachment on the window 20, the part of the outgoing beam emitted by the optical emitter of the transceiving assembly 10 forms a specular reflected beam after being specularly reflected by the window 20, the other part of the outgoing beam emitted by the optical emitter of the transceiving assembly 10 also forms a diffuse reflected beam after being diffusely reflected by the window 20 simultaneously. At this time, an intensity of an optical signal corresponding to the specular reflected beam is stronger, and an intensity of an optical signal corresponding to the diffuse reflected beam is weaker. When there is the attachment on the window 20, the part of the outgoing beam emitted by the optical emitter of the transceiving assembly 10 forms a diffuse reflected beam after being diffusely reflected by the attachment on the window 20, the other part of the outgoing beam emitted by the optical emitter of the transceiving assembly 10 also forms a specular reflected beam after being reflected by the window 20 simultaneously. At this time, an intensity of an optical signal corresponding to the diffuse reflected beam is stronger, and an intensity of an optical signal corresponding to the specular reflected beam is weaker.

The detection module 30 is used as a component for detecting whether there is the attachment on the window 20 in the LiDAR 1. The detection module 30 may be another optical detector independent from the foregoing optical emitter or optical receiver, or may alternatively be formed by the foregoing optical receiver. A specific design idea form of the detection module 30 is introduced below.

The detection module 30 is configured to receive the reflected beam and form the corresponding electrical signal, that is, the reflected beam formed after the part of the outgoing beam emitted by the optical emitter of the transceiving assembly 10 is reflected by the window 20 is received by the detection module 30, and the detection module 30 can convert the optical signal corresponding to the reflected beam into an electrical signal.

The control module serves as a core controller of the LiDAR 1.

The control module is electrically connected to the optical emitter of the transceiving assembly 10 to control the optical emitter to emit the outgoing beam to the target object, and the control module is also electrically connected to the optical receiver of the transceiving assembly 10 to control the optical receiver to receive the echo beam from the target object.

The control module is electrically connected to the detection module 30, and the control module is configured to: based on the corresponding electrical signal, determine whether there is an attachment on the window 20. For example, when there is no attachment on the window 20, the intensity of the optical signal corresponding to the specular reflected beam formed after the part of the outgoing beam emitted by the optical emitter of the transceiving assembly 10 is specularly reflected by the window 20 is stronger. The detection module 30 can convert the optical signal with the stronger intensity into a first electrical signal (one of the foregoing electrical signals, described below), and based on the first electrical signal, the control module can determine that there is no attachment on the window 20. For another example, when there is the attachment on the window 20, the intensity of the optical signal corresponding to the diffuse reflected beam formed after the part of the outgoing beam emitted by the optical emitter of the transceiving assembly 10 is diffusely reflected by the attachment on the window 20 is stronger, the detection module 30 can convert the optical signal with the stronger intensity into a second electrical signal (one of the foregoing electrical signals, described below) different from the first electrical signal, and based on the second electrical signal, the control module can determine that there is the attachment on the window 20. In addition, it should be noted that when the control module determines that there is the attachment on the window 20 based on the corresponding electrical signal, the control module can control another component of the LiDAR 1 to perform a corresponding operation. For example, when the attachment is water mist, the control module can control, for example, a heating module of the LiDAR 1 to heat the window 20 to remove the water mist attached to the window 20. When the attachment is dust, the control module can control, for example, a cleaning module of the LiDAR 1 to clean the window 20 automatically to remove the dust attached to the window 20. Certainly, the control module can also control, for example, an alarm module of the LiDAR 1 to send an alarm signal (for example, a buzzer alarm), to prompt the user to clean the window 20 to remove the dust attached to the window 20.

In some embodiments, the control module can include an analog-to-digital conversion unit and an integrated unit. The analog-to-digital conversion unit can be an analog-to-digital converter (ADC) or a time-to-digital converter (TDC), and the analog-to-digital conversion unit is configured to convert an analog electrical signal output by the optical receiver of the transceiving assembly 10 into a digital electrical signal and output the digital electrical signal to the integrated unit. The integrated unit can be a chip or a field programmable gate array (FPGA), and the integrated unit can be configured to control each structural member of the LiDAR 1, and analyze and process the digital electrical signal output by the analog-to-digital conversion unit to detect the target object. The integrated unit can include a controller and a signal processor, the controller can be configured to control drive of the optical emitter of the transceiving assembly 10, rotation of the light deflection module 40 (described below), and the like. The signal processor can be configured to filter, sample, time and perform other operations on the digital electrical signal output by the analog-to-digital conversion unit, to determine a parameter such as intensity, time of flight or angle of the foregoing echo beam, thereby obtaining relevant parameters such as distance, azimuth, height, speed, posture, and even shape of the target object.

It should be noted that there are many types of LiDARs 1 for detecting the target object based on different light waves. This is not limited in this embodiment of this application. For example, the LiDAR 1 can be a LiDAR. At this time, the optical emitter is a laser emitter, and an outgoing beam emitted by the laser emitter is an outgoing laser beam. Correspondingly, the optical receiver is a laser receiver, an echo beam received by the laser receiver is an echo laser beam, and a reflected beam formed after the part of the outgoing beam emitted by the optical emitter is reflected by the window 20 is the reflection laser beam.

Based on the LiDAR 1 in this embodiment of this application, the part of the outgoing beam emitted by the transceiving assembly 10 forms the reflected beam after being reflected by the window 20. The detection module 30 receives the reflected beam to convert an optical signal corresponding to the reflected beam into a corresponding electrical signal, and based on the corresponding electrical signal, the control module determines whether there is the attachment on the window 20. In this way, the detection module 30 is used to collect the reflected beam of the transceiving assembly 10, which can effectively determine whether there is the attachment on the window 20, thereby improving the detection accuracy of the LiDAR 1.

A specific design idea of the detection module 30 may be another optical detector independent from the foregoing optical emitter and optical receiver. For example, the detection module 30 includes a first detector 31.

The optical emitter and optical receiver of the transceiving assembly 10 are arranged abaxially.

As shown in FIG. 1, in some embodiments, the number of first detectors 31 may be one or more than one (two or more than two), and the first detector 31 is arranged in a one-to-one correspondence with the transceiving assembly 10. That is, each transceiving assembly 10 has a maximum of one corresponding first detector 31.

The first detector 31 is disposed on the optical path of the specular reflected beam of the corresponding transceiving assembly 10, that is, the specular reflected beam of the transceiving assembly 10 can be received by the first detector 31. It should be noted that when the number of first detectors 31 is one, the number of transceiving assemblies 10 may be one. At this time, the first detector 31 is disposed on an optical path of a specular reflected beam of the corresponding transceiving assembly 10. Certainly, the number of transceiving assemblies 10 may also be more than one. At this time, the first detector 31 is disposed on the optical path of the specular reflected beam of the transceiving assembly 10, and the other transceiving assemblies 10 are not correspondingly provided with the first detector 31. When the number of first detectors 31 is more than one, the number of transceiving assemblies 10 is more than one, and the number of first detectors 31 may be equal to the number of transceiving assemblies 10. At this time, each first detector 31 is disposed on an optical path of a specular reflected beam of the transceiving assembly 10 corresponding to the first detector 31. Certainly, the number of first detectors 31 may be less than the number of transceiving assemblies 10. At this time, each first detector 31 is disposed on the optical path of the specular reflected beam of the transceiving assembly 10 corresponding to each first detector 31, and the other transceiving assemblies 10 are not correspondingly provided with the first detector 31.lt should be noted that the angle between the optical path of the outgoing beam emitted by the optical emitter of each transceiving assembly 10 and the window 20 is fixed, and the optical path of the corresponding specular reflected beam formed after specular reflection by the window 20 is also fixed. Only the first detector 31 disposed on the optical path of the specular reflected beam can receive the specular reflected beam. If the first detector 31 is disposed outside the optical path of the specular reflected beam, the first detector 31 cannot receive the specular reflected beam.

The first detector 31 can convert the optical signal of the received specular reflected beam into a first electrical signal (one of the foregoing electrical signals, that is, the foregoing electrical signals include the first electrical signal).

The control module is electrically connected to the first detector 31, and the control module is configured to: based on the first electrical signal, determine whether there is an attachment on the window 20. It can be understood that when there is no attachment on the window 20, the part of the outgoing beam emitted by the optical emitter of the transceiving assembly 10 forms the specular reflected beam after being specularly reflected by the window 20, and at this time, the intensity of the optical signal corresponding to the specular reflected beam is stronger (that is, the specular reflected beam has great energy). Certainly, the part of the outgoing beam emitted by the optical emitter of the transceiving assembly 10 also forms the diffuse reflected beam after being diffusely reflected by the window 20, and at this time, the intensity of the optical signal corresponding to the diffuse reflected beam is weaker. The first detector 31 can convert the optical signal that corresponds to the received specular reflected beam and that has stronger intensity into the first electrical signal, at this time, the intensity of the first electrical signal is stronger, and based on the first electrical signal with the stronger intensity, the control module determines that there is no attachment on the window 20. When there is the attachment on the window 20, the part of the outgoing beam emitted by the optical emitter of the transceiving assembly 10 forms the diffuse reflected beam after being diffusely reflected by the attachment on the window 20, and at this time, the intensity of the optical signal corresponding to the diffuse reflected beam is stronger. Certainly, the part of the outgoing beam emitted by the optical emitter of the transceiving assembly 10 also forms the specular reflected beam after being specularly reflected by the window 20, and at this time, the intensity of the optical signal corresponding to the specular reflected beam is weaker (that is, the specular reflected beam has small energy). The first detector 31 can convert the optical signal that corresponds to the received specular reflected beam and that has weaker intensity into the first electrical signal, at this time, the intensity of the first electrical signal is smaller, and based on the first electrical signal with the smaller intensity, the control module determines that there is the attachment on the window 20.

The optical emitter and optical receiver of the transceiving assembly 10 are arranged coaxially.

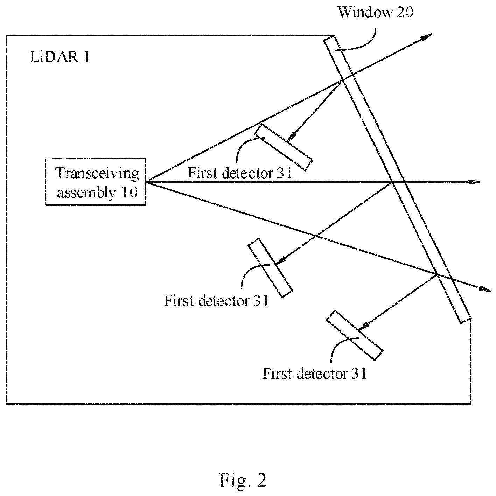

As shown in FIG. 2, in some embodiments, the number of first detectors 31 may be one or more (such as two or more than two). The transceiving assembly 10 is arranged corresponding to at least one first detector 31. The transceiving assembly 10 may be arranged corresponding to one or more first detectors 31.

The optical paths of the specular reflected beams of the transceiving assembly 10 form multiple angles. That is, directions of the specular reflected beams formed after outgoing beams emitted to the window 20 at different incident angles are specularly reflected by the window 20 are also different.

The first detector 31 is disposed on optical paths of specular reflected beams at different angles. When the transceiving assembly 10 is provided with one first detector 31 correspondingly, the first detector 31 can receive the specular reflected beam in one direction within a field of view of the transceiving assembly 10 and generate the first electrical signal. To cover the specular reflected beams in many directions within the field of view of the transceiving assembly 10, the transceiving assembly 10 is provided with multiple first detectors 31 correspondingly.

The first detector 31 is configured to receive a specular reflected beam at a corresponding angle and generate the first electrical signal.

The control module is electrically connected to the first detector 31, and the control module is configured to: based on the first electrical signal, determine whether there is an attachment on the window 20. It can be understood that when there is no attachment on the window 20, the part of the outgoing beam emitted by the optical emitter of the transceiving assembly 10 forms the specular reflected beam after being specularly reflected by the window 20, and at this time, the intensity of the optical signal corresponding to the specular reflected beam in each direction is stronger. Certainly, the part of the outgoing beam emitted by the optical emitter of the transceiving assembly 10 also forms the diffuse reflected beam after being diffusely reflected by the window 20, and at this time, the intensity of the optical signal corresponding to the diffuse reflected beam is weaker. The first detector 31 can convert the optical signal that corresponds to the received specular reflected beams in different directions and that has stronger intensity into the first electrical signal, at this time, the intensity of the first electrical signal is stronger, and based on the first electrical signal with the stronger intensity, the control module can determine that there is no attachment on the window 20. When there is the attachment on the window 20, the part of the outgoing beam emitted by the optical emitter of the transceiving assembly 10 forms the diffuse reflected beams in different directions after being diffusely reflected by the attachment on the window 20, and at this time, the intensity of the optical signal corresponding to the diffuse reflected beam in each direction is stronger. Certainly, the part of the outgoing beam emitted by the optical emitter of the transceiving assembly 10 also forms the specular reflected beams in different directions after being specularly reflected by the window 20, and at this time, the intensity of the optical signal corresponding to the specular reflected beam in each direction is weaker (that is, the specular reflected beam in each direction has small energy). The first detector 31 can convert the optical signal that corresponds to the received specular reflected beams in different directions and that has weaker intensity into the first electrical signal, at this time, the intensity of the first electrical signal is smaller, and based on the first electrical signal with the smaller intensity, the control module can determine that there is the attachment on the window 20.

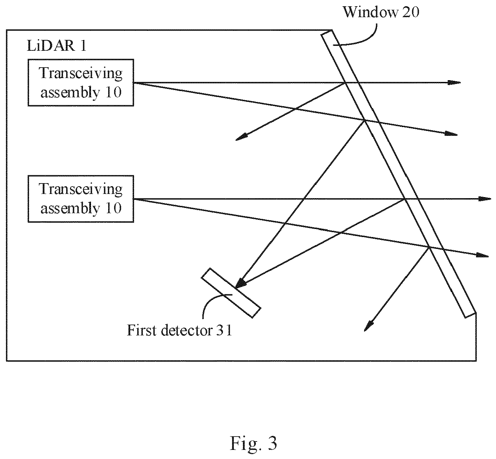

As shown in FIG. 3, in some embodiments, the number of first detectors 31 may be one or more, and the first detector 31 is disposed corresponding to at least two transceiving assemblies 10.

The optical path of the specular reflected beam of the transceiving assembly 10 covers a range of the reflection angle. It should be noted that for the entire LiDAR 1, angle ranges covered by the angles of view of all the transceiving assemblies 10 are different from each other. For example, the number of transceiving assemblies 10 is three, an angle of view of the first transceiving assembly 10 covers -7° to 0° in the front field of view of the LiDAR, an angle of view of the second transceiving assembly 10 covers -2° to 5° in the front field of view of the LiDAR 1, and an angle of view of the third transceiving assembly 10 covers 3° to 7° in the front field of view of the LiDAR 1. A specific value of the range of the reflection angle of each transceiving assembly 10 is not limited herein, and can be properly designed by a designer based on an actual need.

Angles of view of adjacent transceiving assemblies 10 partially overlap, and ranges of reflection angles formed by some of the outgoing beams of the two transceiving assemblies 10 after being reflected by the window also partially overlap correspondingly. The first detector 31 is disposed within an overlapped angle range of the ranges of reflection angles of the at least two transceiving assemblies 10. Therefore, the only one first detector 31 can at least be configured to receive specular reflected beams from the two transceiving assemblies 10, thereby reducing the number of first detectors 31 and overall costs of the LiDAR 1.

The first detector 31 is configured to receive specular reflected beams of the at least two transceiving assemblies 10 and generate the first electrical signal.

The control module is electrically connected to the first detector 31, and the control module is configured to: based on the first electrical signal, determine whether there is an attachment on the window 20. It can be understood that when there is no attachment on the window 20, some of the outgoing beams emitted by the optical emitters of all the transceiving assemblies 10 form the specular reflected beam after being specularly reflected by the window 20, and at this time, the intensity of the optical signal corresponding to the specular reflected beam is stronger (that is, the specular reflected beam has great energy). Certainly, some of the outgoing beams emitted by the optical emitters of all the transceiving assemblies 10 also form the diffuse reflected beam after being diffusely reflected by the window 20, and at this time, the intensity of the optical signal corresponding to the diffuse reflected beam is weaker. The first detector 31 can convert the optical signal that corresponds to the specular reflected beam in an overlapped angle range and that has stronger intensity into the first electrical signal, at this time, the intensity of the first electrical signal is stronger, and based on the first electrical signal with the stronger intensity, the control module determines that there is no attachment on the window 20. When there is the attachment on the window 20, some of the outgoing beams emitted by the optical emitters of all the transceiving assemblies 10 form the diffuse reflected beam after being diffusely reflected by the attachment on the window 20, and at this time, the intensity of the optical signal corresponding to the diffuse reflected beam is stronger. Certainly, the part of the outgoing beam emitted by the optical emitter of the transceiving assembly 10 also forms the specular reflected beam after being specular reflected by the window 20. At this time, the intensity of the optical signal corresponding to the specular reflected beam is weaker (that is, the specular reflected beam has small energy). The first detector 31 can convert the optical signal that corresponds to the received specular reflected beam and that has weaker intensity into the first electrical signal, at this time, the intensity of the first electrical signal is smaller. Based on the first electrical signal with the smaller intensity, the control module determines that there is the attachment on the window 20.

Certainly, in order that the detection module 30 can more accurately detect whether there is an attachment on the window 20 to further improve detection performance of the LiDAR 1, for example, the detection module 30 further includes a second detector 32.

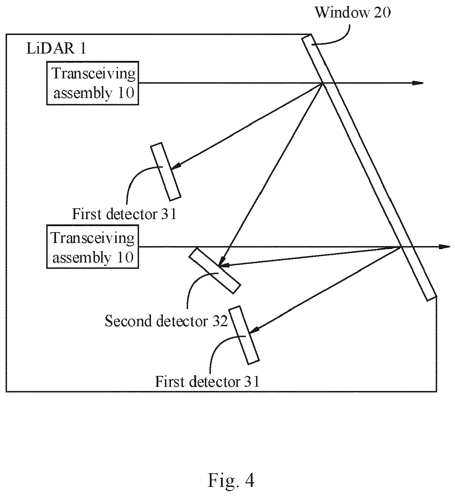

As shown in FIG. 4, the number of second detectors 32 may be one or more. All second detectors 32 are disposed outside the optical path of the specular reflected beam, that is, the specular reflected beam of the transceiving assembly 10 cannot be received by the second detector 32.

The second detector 32 is configured to receive the diffuse reflected beam and generate a second electrical signal (one of the foregoing electrical signals, that is, the foregoing electrical signals include the second electrical signal). When multiple transceiving assemblies 10 work in sequence, the second detector 32 does not work during a non-detection period of the corresponding transceiving assembly 10 (described below), and the second detector 32 only works during the detection period of the corresponding transceiving assembly 10, to receive the diffuse reflected beam. At this time, each second detector 32 may be configured to receive the diffuse reflected beam from one transceiving assembly 10 and generate a second electrical signal. In view that the diffuse reflected beams are relatively dispersed, to reduce the number of second detectors 32 and the overall costs of the LiDAR 1, preferably, the second detector 32 is configured to receive diffuse reflected beams from the at least two transceiving assemblies 10. That is, the diffuse reflected beams of different transceiving assemblies 10 can be received by the same second detector 32.

The control module is electrically connected to the second detector 32, and the control module is configured to: based on at least one of the first electrical signal or the second electrical signal, determine whether there is an attachment on the window 20. It can be understood that when there is no attachment on the window 20, the part of the outgoing beam emitted by the optical emitter of the transceiving assembly 10 forms the specular reflected beam after being reflected by the window 20, and at this time, the intensity of the optical signal corresponding to the specular reflected beam is stronger (that is, the specular reflected beam has great energy). Certainly, the part of the outgoing beam emitted by the optical emitter of the transceiving assembly 10 also forms the diffuse reflected beam after being diffusely reflected by the window 20, and at this time, the intensity of the optical signal corresponding to the diffuse reflected beam is weaker (that is, the diffuse reflected beam has small energy). The first detector 31 can convert the optical signal that corresponds to the specular reflected beam and that has stronger intensity into the first electrical signal. At this time, the intensity of the first electrical signal is stronger, and the second detector 32 can convert the optical signal that corresponds to the diffuse reflected beam and that has weaker intensity into the second electrical signal. At this time, the intensity of the second electrical signal is smaller, and based on the first electrical signal alone, the controller can determine that there is no attachment on the window 20, or based on the second electrical signal alone, the controller can determine that there is no attachment on the window 20, or based on both the first electrical signal and the second electrical signal, the controller can determine that there is no attachment on the window 20. When there is the attachment on the window 20, the part of the outgoing beam emitted by the optical emitter of the transceiving assembly 10 forms the diffuse reflected beam after being diffusely reflected by the attachment on the window 20, and at this time, the intensity of the optical signal corresponding to the diffuse reflected beam is stronger (that is, the diffuse reflected beam has great energy). Certainly, the part of the outgoing beam emitted by the optical emitter of the transceiving assembly 10 also forms the specular reflected beam after being specularly reflected by the window 20, and at this time, the intensity of the optical signal corresponding to the specular reflected beam is weaker (that is, the specular reflected beam has small energy). The second detector 32 can convert the optical signal that corresponds to the diffuse reflected beam and that has stronger intensity into the second electrical signal. At this time, the intensity of the second electrical signal is greater, and the first detector 31 can convert the optical signal that corresponds to the specular reflected beam and that has weaker intensity into the first electrical signal. At this time, the intensity of the first electrical signal is smaller, and based on the second electrical signal alone, the controller can independently determine that there is the attachment on the window 20, or based on the first electrical signal alone, the controller can independently determine that there is the attachment on the window 20, or based on both the first electrical signal and the second electrical signal, the controller can determine that there is the attachment on the window 20. It should be noted that when the control module determines whether there is the attachment on the window 20 by using both the first electrical signal and the second electrical signal, a determining basis may be that the first electrical signal and the second electrical signal respectively satisfy different conditional expressions, or may be that both the first electrical signal and the second electrical signal satisfy the same conditional expression.

Certainly, the first detector 31 and the second detector 32 of the detection module 30 can reuse the optical receiver of the foregoing transceiving assembly 10. For example, the optical receiver of the transceiving assembly 10 serves as the first detector 31. Therefore, the optical receiver of the transceiving assembly 10 can be configured to receive both the echo beam from the target object and the specular reflected beam, which reduces the number of components in the LiDAR 1 and can reduce both an overall volume of the LiDAR 1 and the overall costs of the LiDAR 1.

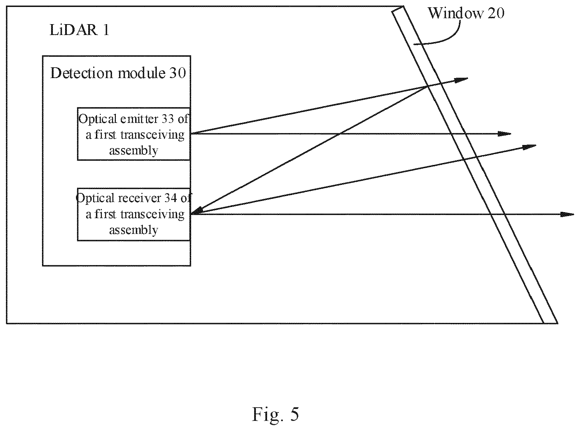

As shown in FIG. 5, in some embodiments, the number of transceiving assemblies 10 is at least two, and the number of transceiving assemblies 10 may be two or more. The specific number of transceiving assemblies 10 is not limited herein, and can be properly designed by a designer based on an actual need.

The transceiving assemblies 10 include a first transceiving assembly and a second transceiving assembly.

The optical emitter 33 of the first transceiving assembly emits an outgoing beam.

The detection module 30 includes an optical receiver 34 of the second transceiving assembly. The optical receiver 34 of the second transceiving assembly is on the optical path of the specular reflected beam of the first transceiving assembly. That is, the specular reflected beam of the first transceiving assembly can be received by the optical receiver 34 of the second transceiving assembly.

The optical receiver 34 of the second transceiving assembly converts the specular reflected beam received from the first transceiving assembly into a third electrical signal (one of the foregoing electrical signals, that is, the foregoing electrical signals include the third electrical signal).

The control module is electrically connected to the optical receiver 34 of the second transceiving assembly, and the control module is configured to: based on the third electrical signal, determine whether there is an attachment on the window 20. It can be understood that when there is no attachment on the window 20, the part of the outgoing beam emitted by the optical emitter 33 of the first transceiving assembly forms the specular reflected beam after being specularly reflected by the window 20, and at this time, the intensity of the optical signal corresponding to the specular reflected beam is stronger. Certainly, the part of the outgoing beam emitted by the optical emitter 33 of the first transceiving assembly also forms the diffuse reflected beam after being diffusely reflected by the window 20, and at this time, the intensity of the optical signal corresponding to the diffuse reflected beam is weaker. The optical receiver 34 of the second transceiving assembly can convert the optical signal that corresponds to the received specular reflected beam and that has stronger intensity into the third electrical signal. At this time, the intensity of the third electrical signal is stronger, and based on the third electrical signal with the stronger intensity, the control module determines that there is no attachment on the window 20. When there is the attachment on the window 20, the part of the outgoing beam emitted by the optical emitter 33 of the first transceiving assembly forms the diffuse reflected beam after being diffusely reflected by the attachment on the window 20, and at this time, the intensity of the optical signal corresponding to the diffuse reflected beam is stronger. Certainly, the part of the outgoing beam emitted by the optical emitter 33 of the first transceiving assembly also forms the specular reflected beam after being specularly reflected by the window 20, and at this time, the intensity of the optical signal corresponding to the specular reflected beam is weaker (that is, the specular reflected beam has small energy). The optical receiver 34 of the second transceiving assembly can convert the optical signal that corresponds to the received specular reflected beam and that has weaker intensity into the third electrical signal. At this time, the intensity of the third electrical signal is smaller, and based on the third electrical signal with the smaller intensity, the control module determines that there is the attachment on the window 20.

Further, in some embodiments, when the first transceiving assembly and the second transceiving assembly work in sequence, the optical receiver 34 of the second transceiving assembly receives the specular reflected beam during the non-detection period. It can be understood that the optical receiver 34 of the second transceiving assembly works normally during the detection period and receives the echo beam from the target object. The optical receiver 34 of the second transceiving assembly does not work during the non-detection period and no corresponding echo beam needs to be received. Therefore, during the non-detection period, the optical receiver 34 of the second transceiving assembly can be configured to receive the specular reflected beam of the first transceiving assembly, so that the optical receiver 34 of the second transceiving assembly serves as the first detector 31. "Working in sequence" means that the optical emitter of the second transceiving assembly does not start emitting the outgoing beam until the optical emitter 33 of the first transceiving assembly starts emitting the outgoing beam and the optical receiver of the first transceiving assembly finishes receiving the echo beam. The "non-detection period" is understood as time during which the optical emitter of the second transceiving assembly does not emit an outgoing laser beam.

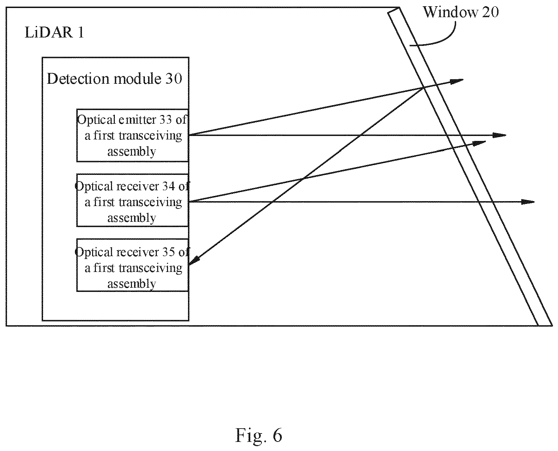

As shown in FIG. 6, in some embodiments, the transceiving assembly 10 may also include other transceiving assembly except the foregoing first transceiving assembly and second transceiving assembly, where the number of other transceiving assemblies may be one or more.

At this time, the detection module 30 further includes an optical receiver 35 of the other transceiving assembly. The optical receiver 35 of other transceiving assembly is on an optical path other than the optical path of the specular reflected beam of the first transceiving assembly. That is, the diffuse reflected beam of the first transceiving assembly can be received by the optical receiver 35 of the other transceiving assembly. It can be understood that the optical receiver 35 of the other transceiving assembly works normally during the detection period and receives the echo beam from the target object. The optical receiver 35 of the other transceiving assembly does not work during the non-detection period and no echo beam from the target object needs to be received. Therefore, during the non-detection period, the optical receiver 35 of the other transceiving assembly can be configured to receive the diffuse reflected beam of the first transceiving assembly, so that the optical receiver 35 of the other transceiving assembly serves as the second detector 32.

At least one of all other transceiving assemblies has an optical receiver 35 configured to receive the diffuse reflected beam of the first transceiving assembly and generate a fourth electrical signal (one of the foregoing electrical signals, that is, the foregoing electrical signals include the fourth electrical signal).

The control module is electrically connected to the optical receiver 35 of the other transceiving assembly, and the control module is configured to: based on at least one of the third electrical signal and the fourth electrical signal, determine whether there is an attachment on the window 20. It can be understood that when there is no attachment on the window 20, the part of the outgoing beam emitted by the optical emitter 33 of the first transceiving assembly forms the specular reflected beam after being specularly reflected by the window 20, and at this time, the intensity of the optical signal corresponding to the specular reflected beam is stronger (that is, the specular reflected beam has great energy). Certainly, the part of the outgoing beam emitted by the optical emitter 33 of the first transceiving assembly also forms the diffuse reflected beam after being diffusely reflected by the window 20, and at this time, the intensity of the optical signal corresponding to the diffuse reflected beam is weaker (that is, the diffuse reflected beam has small energy). The optical receiver 34 of the second transceiving assembly can convert the optical signal that corresponds to the received specular reflected beam and that has stronger intensity into the third electrical signal. At this time, the intensity of the third electrical signal is stronger, and an optical receiver 35 of the other transceiving assembly can convert the optical signal that corresponds to the received diffuse reflected beam and that has weaker intensity into the fourth electrical signal. At this time, the intensity of the fourth electrical signal is smaller, and based on the third electrical signal alone, the controller can determine that there is no attachment on the window 20, or based on the fourth electrical signal alone, the controller can determine that there is no attachment on the window 20, or based on both the third electrical signal and the fourth electrical signal, the controller can determine that there is no attachment on the window 20. When there is the attachment on the window 20, the part of the outgoing beam emitted by the optical emitter 33 of the first transceiving assembly forms the diffuse reflected beam after being diffusely reflected by the window 20, and at this time, the intensity of the optical signal corresponding to the diffuse reflected beam is stronger (that is, the diffuse reflected beam has great energy). Certainly, the part of the outgoing beam emitted by the optical emitter 33 of the first transceiving assembly also forms the specular reflected beam after being specularly reflected by the window 20, and at this time, the intensity of the optical signal corresponding to the specular reflected beam is weaker (that is, the specular reflected beam has small energy). An optical receiver 35 of the other transceiving assembly can convert the optical signal that corresponds to the received diffuse reflected beam and that has stronger intensity into the fourth electrical signal. At this time, the intensity of the fourth electrical signal is greater, the optical receiver 34 of the second transceiving assembly can convert the optical signal that corresponds to the received specular reflected beam and that has weaker intensity into the third electrical signal. At this time, the intensity of the third electrical signal is smaller, and based on the fourth electrical signal alone, the controller can determine that there is the attachment on the window 20, or based on the third electrical signal alone, the controller can determine that there is the attachment on the window 20, or based on both the third electrical signal and the fourth electrical signal, the controller can determine that there is the attachment on the window 20. When the controller determines whether there is the attachment on the window 20 by using both the third electrical signal and the fourth electrical signal, a determining basis may be that the third electrical signal and the fourth electrical signal respectively satisfy different conditional expressions, or may be that both the third electrical signal and the fourth electrical signal satisfy the same conditional expression.

It should be noted that arrangement positions, optical path directions, and the like of the multiple transceiving assemblies 10 within the LiDAR 1 are all designed in advance and are a basic architectural design of the LiDAR 1. In order that the LiDAR 1 can normally obtain relevant parameters such as distance, azimuth, height, speed, posture and even a shape of the target object, the basic architecture of the LiDAR 1 that is formed based on the arrangement positions, optical path directions, and the like of the multiple transceiving assemblies 10 within the LiDAR 1 is fixed. When the basic structure of the LiDAR 1 is fixed, a specular reflected beam of one transceiving assembly 10 that can be aligned with an optical path of another transceiving assembly 10 and that can be received by another transceiving assembly 10 can be found through testing or calculation. The foregoing first transceiving assembly and second transceiving assembly can be determined only when "one transceiving assembly 10" and "other transceiving assembly 10" described above satisfy an optical path correspondence. In addition, the first transceiving assembly serves as "one transceiving assembly 10" described above, and the second transceiving assembly serves as "another transceiving assembly 10" described above. That is, the optical path correspondence between the transceiving assemblies 10 is first determined through testing, calculation or another manner, and then a reuse design is made by using the optical path correspondence, to determine the first transceiving assembly and the second transceiving assembly, rather than by simply directly arranging the first transceiving assembly and the second transceiving assembly.

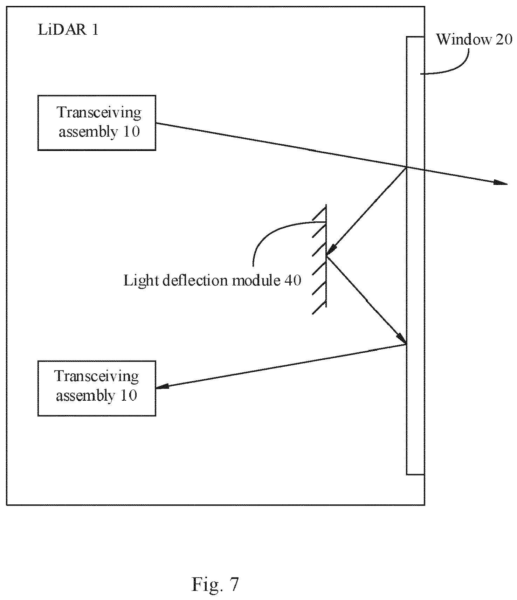

Further, in order that the specular reflected beam of the first transceiving assembly can accurately transmit to the optical receiver 34 of the second transceiving assembly, to improve detection accuracy of the LiDAR 1, as shown in FIG. 7, in some embodiments, the LiDAR 1 also includes a light deflection module 40. The light deflection module 40 is on the optical path of the specular reflected beam of the first transceiving assembly, and the light deflection module 40 is configured to adjust the optical path direction of the specular reflected beam of the first transceiving assembly, so that the specular reflected beam can directly transmit to the optical receiver 34 of the second transceiving assembly after being reflected by the light deflection module 40. The light deflection module 40 may include, but is not limited to, a reflecting mirror or a refractive prism. In addition, when the light deflection module 40 includes a reflecting mirror, the reflecting mirror has a reflecting surface. The reflecting mirror can be fixed, so that the reflecting surface faces toward a single direction, or the reflecting mirror can rotate, so that the reflecting surface can face toward different directions. It should be noted that, when "one transceiving assembly 10" and "the other transceiving assembly 10" that satisfy the foregoing optical path correspondence are not found through testing or calculation, the optical path direction of the specular reflected beam of "one transceiving assembly 10" can be adjusted through the design of the optical deflection module 40, so that the specular reflected beam of "one transceiving assembly 10" that is adjusted to be aligned with the optical path of the "other transceiving assembly 10" and can be received by the "other transceiving assembly 10," thereby ensuring that "one transceiving assembly 10" and "the other transceiving assembly 10" satisfy the foregoing optical path correspondence.

A second aspect of this application proposes a mobile device, where the mobile device includes the foregoing LiDAR 1. The mobile device may include, but is not limited to, a device such as an automobile, a robot, a logistics vehicle, or a patrol vehicle having functions such as navigation, obstacle avoidance, obstacle recognition, ranging, speed measurement, and automated driving. In this design, for the mobile device including the foregoing LiDAR 1, because the LiDAR 1 has good detection accuracy, the mobile device has good safety performance.

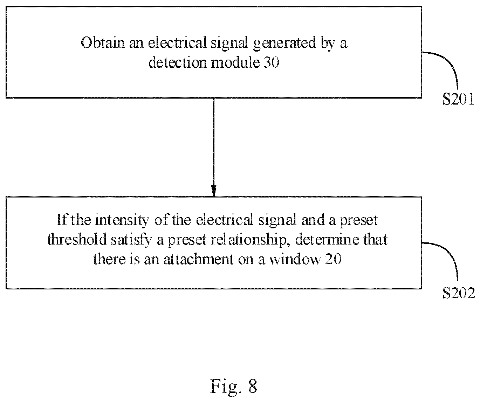

Referring to FIGs. 8-10, a third aspect of this application proposes a LiDAR attachment detection method, where the LiDAR attachment detection method provided in this embodiment of this application can be applied to a LiDAR 1 for detecting an object based on various light waves, for example, a LiDAR.

Next, application scenarios of the LiDAR attachment detection method provided in this embodiment of this application are introduced, and the application scenarios may include, but are not limited to: a scenario in which the robot performs self-positioning and route planning through the LiDAR 1; a scenario in which an unmanned vehicle performs environmental detection and route planning through the LiDAR 1; a scenario in which an unmanned aerial vehicle performs obstacle detection through the LiDAR 1; a scenario in which an augmented reality (AR) device performs environmental detection and model building through the LiDAR 1; and a scenario in which an ocean exploration device detects fish species and fish density through the LiDAR 1. In the foregoing various scenarios, the attachment on the window 20 of the LiDAR 1 can be detected in the LiDAR attachment detection method provided in this embodiment of this application, to further process the attachment, thereby improving detection accuracy of the LiDAR 1.

The LiDAR attachment detection method provided in this embodiment of this application is described below. The detection method is applied to the foregoing LiDAR 1. It should be noted that each step in the method can be performed by the LiDAR 1, or can be implemented by the foregoing control module of the LiDAR 1. As shown in FIG. 8, FIG. 8 is a schematic flowchart of a LiDAR attachment detection method according to an embodiment of this application. As shown in FIG. 8, the detection method includes steps S201 and S202.

Step S201: Obtain an electrical signal generated by a detection module 30.

During working, the LiDAR 1 emits an outgoing beam to the target object and receives an echo beam reflected back from the target object. In an embodiment, the LiDAR 1 can emit the outgoing beam through the optical emitter of the transceiving assembly 10 and receive the echo beam through the optical receiver of the transceiving assembly 10.

Part of the outgoing beam emitted by the optical emitter of the transceiving assembly 10 is reflected by the window 20 of the LiDAR 1 and forms a reflected beam, where the reflected beam includes a specular reflected beam and a diffuse reflected beam. When there is no attachment on the window 20, the part of the outgoing beam emitted by the optical emitter of the transceiving assembly 10 forms the specular reflected beam after being specularly reflected by the window 20, the other part of the outgoing beam emitted by the optical emitter of the transceiving assembly 10 also forms the diffuse reflected beam simultaneously after being diffusely reflected by the window 20, and at this time, the intensity of the optical signal corresponding to the specular reflected beam is stronger, and the intensity of the optical signal corresponding to the diffuse reflected beam is weaker. When there is the attachment on the window 20, the part of the outgoing beam emitted by the optical emitter of the transceiving assembly 10 forms the diffuse reflected beam after being diffusely reflected by the attachment on the window 20, and the other part of the outgoing beam emitted by the optical emitter of the transceiving assembly 10 also forms the specular reflected beam simultaneously after being reflected by the window 20. At this time, the intensity of the optical signal corresponding to the diffuse reflected beam is stronger, and the intensity of the optical signal corresponding to the specular reflected beam is weaker.

The detection module 30 is configured to receive the reflected beam and generate a corresponding electrical signal. The detection module 30 may be another optical detector independent from the foregoing optical emitter or optical receiver, or may alternatively be formed by the foregoing optical receiver. When the detection module 30 is another detector independent from the foregoing optical emitter and the foregoing optical receiver, the detection module 30 includes the foregoing first detector 31, and the first detector 31 is configured to receive the specular reflected beam of the transceiving assembly 10 and generate the foregoing first electrical signal. Certainly, the detection module 30 may also include the foregoing second detector 32. The second detector 32 is configured to receive the diffuse reflected beam of the transceiving assembly 10 and generate the foregoing second electrical signal. When the detection module 30 reuses the foregoing optical receiver, the optical receiver 34 of the foregoing second transceiving assembly can be used as the detection module 30, and the optical receiver 34 of the second transceiving assembly is configured to receive the specular reflected beam of the foregoing first transceiving assembly and generate the foregoing third electrical signal. Certainly, the optical receiver 35 of the another transceiving assembly can also be used as the foregoing detection module 30, and the optical receiver 35 of the another transceiving assembly is configured to receive the diffuse reflected beam of the first transceiving assembly and generate the foregoing fourth electrical signal. The electrical signals include the foregoing first electrical signal, second electrical signal, third electrical signal and fourth electrical signal.

Step S202: If the intensity of the electrical signal and a preset threshold satisfy a preset relationship, determine that there is the attachment on the window 20.

It can be understood that if there is no attachment on the window 20, an actual intensity of the optical signal of the specular reflected beam received by the detection module 30 is stronger. The first detector 31 can convert the optical signal with stronger intensity that corresponds to the specular reflected beam and generate the foregoing first electrical signal. At this time, the intensity of the first electrical signal is greater. The intensity of the first electrical signal is compared with the preset threshold to determine that there is no attachment on the window 20. Alternatively, the optical receiver 34 of the second transceiving assembly can convert the optical signal with stronger intensity that corresponds to the specular reflected beam and generate the foregoing third electrical signal. At this time, the intensity of the third electrical signal is greater. The intensity of the third electrical signal is compared with the preset threshold to determine that there is no attachment on the window 20.

Correspondingly, if there is no attachment on the window 20, an actual intensity of the optical signal of the diffuse reflected beam received by the detection module 30 is weaker. The second detector 32 can convert the optical signal with weaker intensity that corresponds to the diffuse reflected beam and generate the foregoing second electrical signal. At this time, the intensity of the second electrical signal is smaller. The intensity of the second electrical signal is compared with the preset threshold to determine that there is no attachment on the window 20. Alternatively, the optical receiver 35 of the other transceiving assembly can convert the optical signal with weaker intensity that corresponds to the diffuse reflected beam and generate the foregoing fourth electrical signal. At this time, the intensity of the fourth electrical signal is smaller. The intensity of the fourth electrical signal is compared with the preset threshold to determine that there is no attachment on the window 20.

Certainly, if there is the attachment on the window 20, an actual intensity of the optical signal of the diffuse reflected beam received by the detection module 30 is stronger. The second detector can convert the optical signal with stronger intensity that corresponds to the diffuse reflected beam and generate the foregoing second electrical signal. At this time, the intensity of the second electrical signal is greater. The intensity of the second electrical signal is compared with the preset threshold to determine that there is the attachment on the window 20. Alternatively, the optical receiver 35 of the other transceiving assembly can convert the optical signal with stronger intensity that corresponds to the diffuse reflected beam and generate the foregoing fourth electrical signal. At this time, the intensity of the fourth electrical signal is greater. The fourth electrical signal is compared with the preset threshold to determine that there is the attachment on the window 20.

Correspondingly, if there is the attachment on the window 20, an actual intensity of the optical signal of the specular reflected beam received by the detection module 30 is weaker. The first detector can convert the optical signal with weaker intensity that corresponds to the specular reflected beam and generate the foregoing first electrical signal. At this time, the intensity of the first electrical signal is smaller. The intensity of the first electrical signal is compared with the preset threshold to determine that there is the attachment on the window 20. Alternatively, the optical receiver 34 of the second transceiving assembly can convert the optical signal with weaker intensity that corresponds to the specular reflected beam and generate the foregoing third electrical signal. At this time, the intensity of the third electrical signal is smaller. The third electrical signal is compared with the preset threshold to determine that there is the attachment on the window 20.

It should be noted that the electrical signal includes at least one of a first electrical signal, a second electrical signal, a third electrical signal, or a fourth electrical signal, where the first electrical signal, the second electrical signal, the third electrical signal, and the fourth electrical signal are different from each other.

It should be noted that the "intensity of electrical signal" is a physical quantity for characterizing a value of an electrical signal. For example, the intensity of the electrical signal is at least one of a peak voltage, pulse width, or an integral area. In addition, it can be understood that the stronger the intensity of the electrical signal, the greater the peak voltage, the pulse width, and the integral area. On the contrary, the weaker the intensity of the electrical signal, the smaller the peak voltage, the pulse width, and the integral area.

Based on the LiDAR attachment detection method in this embodiment of this application, the electrical signal generated by the detection module 30 is obtained, the intensity of the electrical signal is compared with the preset threshold, and when the intensity of the electrical signal and the preset threshold satisfy the preset relationship, it can be determined that there is the attachment on the window 20, which can effectively improve the detection accuracy of the LiDAR 1.

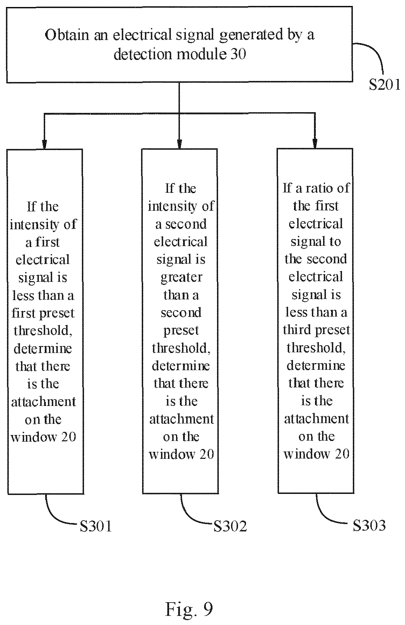

Further, as shown in FIG. 9, FIG. 9 is a schematic flowchart of a LiDAR attachment detection method according to an embodiment of this application. As shown in FIG. 9, step S202 includes steps S301, S302, and S303.

Step S301: If the intensity of a first electrical signal is less than a first preset threshold, determine that there is the attachment on the window 20.

In step S301, if there is the attachment on the window 20, an actual intensity of the optical signal of the specular reflected beam received by the first detector 31 is weaker, and therefore, the intensity of the first electrical signal is smaller. The intensity of the first electrical signal is compared with a value of the first preset threshold, and when the intensity of the first electrical signal is less than the first preset threshold, it is determined that there is the attachment on the window 20. On the contrary, when the intensity of the first electrical signal is greater than or equal to the first threshold, it is determined that there is no attachment on the window 20. The foregoing preset threshold includes a first preset threshold, and the first preset threshold can be preset based on an actual situation. For example, when the optical emitter and the optical receiver of the transceiving assembly 10 are arranged abaxially, the first detector 31 is arranged in a one-to-one correspondence with the transceiving assembly 10. At this time, the first detector 31 is only configured to receive the specular reflected beam of the corresponding transceiving assembly 10, and therefore, the first preset threshold of the first detector 31 can be preset to a smaller value. When the optical emitter and the optical receiver of the transceiving assembly 10 are arranged coaxially, if the transceiving assembly 10 is arranged corresponding to the multiple first detectors 31, at this time, each first detector 31 is only configured to receive the specular reflected beam of the transceiving assembly 10 in one direction, and therefore, the first preset threshold of the first detector 31 can be preset to a smaller value. If the first detector 31 corresponds to multiple transceiving assemblies, at this time, the first detector 31 is configured to receive specular reflected beams of at least two transceiving assemblies 10, and therefore, the first preset threshold of the first detector 31 can be preset to a greater value. A specific value of the first preset threshold needs to be set based on the actual situation. Details are not described herein.

Step S302: If the intensity of a second electrical signal is greater than a second preset threshold, determine that there is the attachment on the window 20.

In step S302, if there is the attachment on the window 20, an actual intensity of the optical signal of the diffuse reflected beam received by the second detector 32 is stronger, and therefore, the intensity of the second electrical signal is greater. The intensity of the second electrical signal is compared with a value of the second preset threshold, and when the intensity of the second electrical signal is greater than the second preset threshold, it is determined that there is the attachment on the window 20. On the contrary, when the intensity of the second electrical signal is less than or equal to the second threshold, it is determined that there is no attachment on the window 20. The foregoing preset threshold includes a second preset threshold, and the second preset threshold can be preset based on an actual situation. It should be noted that a setting method for the second preset threshold is the same as a setting method for the first preset threshold, and also satisfies a principle that the greater the energy of the diffuse reflected beam of the transceiving assembly that is received by the second detector 32, the greater the preset value of the second preset threshold. Conversely, the setting method for the second preset threshold satisfies a principle that the smaller the energy of the diffuse reflected beam of the transceiving assembly that is received by the second detector 32, the smaller the preset value of the second preset threshold. Details are not described herein.

Step S303: If a ratio of the first electrical signal to the second electrical signal is less than a third preset threshold, determine that there is the attachment on the window 20.

In step S303, if there is the attachment on the window 20, an actual intensity of the optical signal of the specular reflected beam received by the first detector 31 is weaker, and therefore, the intensity of the first electrical signal is smaller. An actual intensity of the optical signal corresponding to the diffuse reflected beam received by the second detector 32 is stronger, and therefore, the intensity of the second electrical signal is greater. A ratio of the first electrical signal to the second electrical signal is compared with a value of the third preset threshold, and when the ratio of the first electrical signal to the second electrical signal is less than the third preset threshold, it is determined that there is the attachment on the window 20. On the contrary, when the ratio of the first electrical signal to the second electrical signal is greater than or equal to the third preset threshold, it is determined that there is no attachment on the window 20. The foregoing preset threshold includes a third preset threshold, and the third preset threshold can be preset based on an actual situation. It should be noted that a setting method for the third preset threshold is the same as a setting method for the first preset threshold. Details are not described herein.

It should be noted that when at least one of the foregoing steps S301, S302, or S303 satisfies the requirement, it can be determined that there is the attachment on the window 20. Certainly, in addition to at least one of the foregoing steps S301, S302, or S303, another step may also be performed to determine that there is the attachment on the window 20, provided that the another step satisfies design logics. Details are not described herein.

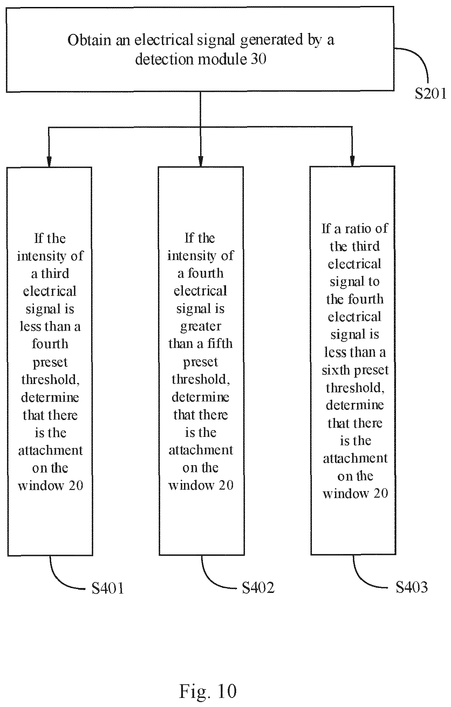

Further, as shown in FIG. 10, FIG. 10 is a schematic flowchart of a LiDAR attachment detection method according to an embodiment of this application. As shown in FIG. 10, step S202 includes steps S401, S402, or S403.

Step S401: If the intensity of a third electrical signal is less than a fourth preset threshold, determine that there is the attachment on the window 20.

In step S401, if there is the attachment on the window 20, an actual intensity of the optical signal of the specular reflected beam received by the optical receiver 34 of the second transceiving assembly is weaker, and therefore, the intensity of the third electrical signal is smaller. The intensity of the third electrical signal is compared with a value of the fourth preset threshold, and when the intensity of the third electrical signal is less than the fourth preset threshold, it is determined that there is the attachment on the window 20. On the contrary, when the intensity of the third electrical signal is greater than or equal to the fourth threshold, it is determined that there is no attachment on the window 20. The foregoing preset threshold includes a fourth preset threshold, and the fourth preset threshold can be preset based on an actual situation. It should be noted that a setting method for the fourth preset threshold is the same as a setting method for the first preset threshold. Details are not described herein.

Step S402: If the intensity of a fourth electrical signal is greater than a fifth preset threshold, determine that there is the attachment on the window 20.

In step S402, if there is the attachment on the window 20, an actual intensity of the optical signal of the diffuse reflected beam received by the optical receiver 35 of the another transceiving assembly is stronger, and therefore, the intensity of the third electrical signal is greater. The intensity of the fourth electrical signal is compared with a value of the fifth preset threshold, and when the intensity of the fourth electrical signal is greater than the fifth preset threshold, it is determined that there is the attachment on the window 20. On the contrary, when the intensity of the fourth electrical signal is less than or equal to the fifth threshold, it is determined that there is no attachment on the window 20. The foregoing preset threshold includes a fifth preset threshold, and the fifth preset threshold can be preset based on an actual situation. It should be noted that a setting method for the fifth preset threshold is the same as a setting method for the first preset threshold. Details are not described herein.

Step S403: If a ratio of the third electrical signal to the fourth electrical signal is less than a sixth preset threshold, determine that there is the attachment on the window 20.

In step S403, if there is the attachment on the window 20, an actual intensity of the optical signal of the specular reflected beam received by the optical receiver 34 of the second transceiving assembly is weaker, and therefore, the intensity of the third electrical signal is smaller. An actual intensity of the optical signal corresponding to the diffuse reflected beam received by the optical receiver 35 of another transceiving assembly is stronger, and therefore, the intensity of the fourth electrical signal is greater. A ratio of the third electrical signal to the fourth electrical signal is compared with a value of the sixth preset threshold, and when the ratio of the third electrical signal to the fourth electrical signal is less than the sixth preset threshold, it is determined that there is the attachment on the window 20. On the contrary, when the ratio of the third electrical signal to the fourth electrical signal is greater than or equal to the sixth preset threshold, it is determined that there is no attachment on the window 20. The foregoing preset threshold includes a sixth preset threshold, and the sixth preset threshold can be preset based on an actual situation. It should be noted that a setting method for the sixth preset threshold is the same as a setting method for the first preset threshold. Details are not described herein.

It should be noted that when at least one of the foregoing steps S401, S402, or S403 satisfies the requirement, it can be determined that there is the attachment on the window 20. Certainly, in addition to at least one of the foregoing steps S401, S402, or S403, another step may also be performed to determine that there is the attachment on the window 20, provided that the step satisfies design logics. Details are not described herein.

The same or similar reference signs in the drawings of the embodiments correspond to the same or similar components. In descriptions of this application, it should be understood that azimuth or position relationships indicated by terms such as "above," "under," "left," and "right" are based on the azimuth or position relationships shown in the accompanying drawings, are merely intended to describe this application and simplify the descriptions, but are not intended to indicate or imply that the specified device or element shall have specific azimuth or be formed and operated in specific azimuth, and therefore, the terms for describing the position relationships in the drawings are only used for exemplary illustration, and should not be construed as a limitation on this patent. A person of ordinary skill in the art can understand specific meanings of the foregoing terms based on a specific situation.

The foregoing descriptions are only preferred embodiments of this application, and are not intended to limit this application. Any modification, equivalent replacement and improvement made within the spirit and principle of this application shall be included within the protection scope of this application.

## Claims

1. A LiDAR, comprising:
a transceiving assembly, configured to emit an outgoing beam and receive an echo beam;
a window mounted on an optical path of the transceiving assembly, wherein part of the outgoing beam emitted by the transceiving assembly is reflected by the window and forms a reflected beam, and the reflected beam comprises a specular reflected beam;
a detection module, configured to receive the reflected beam and generate a corresponding electrical signal; and
a control module electrically connected to the transceiving assembly and the detection module, configured to determine whether there is an attachment on the window based on the corresponding electrical signal.

2. The LiDAR according to claim 1, wherein:
the transceiving assembly comprises an optical emitter and a corresponding optical receiver arranged abaxially, the optical emitter is electrically connected to the control module and configured to emit the outgoing beam, and the optical receiver is electrically connected to the control module and configured to receive the echo beam;
the detection module comprises at least one first detector, the first detector is arranged in a one-to-one correspondence with the transceiving assembly, and the first detector is arranged on the optical path of the specular reflected beam of the corresponding transceiving assembly and configured to receive the specular reflected beam and generate a first electrical signal; and
each first detector is electrically connected to the control module, and the control module is configured to determine whether there is the attachment on the window based on the first electrical signal, wherein the electrical signal includes the first electrical signal.

3. The LiDAR according to claim 1, wherein:
the transceiving assembly comprises an optical emitter and a corresponding optical receiver arranged coaxially, the optical emitter is electrically connected to the control module and configured to emit the outgoing beam, and the optical receiver is electrically connected to the control module and configured to receive the echo beam;
the detection module comprises at least one first detector, the transceiving assembly is arranged corresponding to the at least one first detector, optical paths of the specular reflected beams of the transceiving assembly are in multiple angles, and the first detectors are arranged on the optical paths of the specular reflected beams at different angles and configured to receive the specular reflected beams at corresponding angles and generate first electrical signals; and
the first detectors are electrically connected to the control module, and the control module is configured to determine whether there is the attachment on the window based on the first electrical signals, wherein the electrical signal includes the first electrical signals.

4. The LiDAR according to claim 1, wherein:
the transceiving assembly comprises an optical emitter and a corresponding optical receiver arranged coaxially, the optical emitter is electrically connected to the control module and configured to emit the outgoing beam, and the optical receiver is electrically connected to the control module and configured to receive the echo beam;
the detection module comprises at least one first detector, the first detector is arranged corresponding to at least two transceiving assemblies, optical path of the specular reflected beam of the transceiving assembly covers a reflection angle range, and the first detector is arranged within an overlapped angle range of the reflection angle ranges of the at least two transceiving assemblies and configured to receive specular reflected beams of the at least two transceiving assemblies and generate a first electrical signal; and
each first detector is electrically connected to the control module, and the control module is configured to determine whether there is the attachment on the window based on the first electrical signal, wherein the electrical signal includes the first electrical signal.

5. The LiDAR according to any one of claims 2 to 4, wherein the reflected beam further comprises a diffuse reflected beam;
the detection module further comprises at least one second detector, the at least one second detector is arranged outside the optical path of the specular reflected beam, and configured to receive the diffuse reflected beam and generate a second electrical signal; and
each second detector is electrically connected to the control module, and the control module determines whether there is the attachment on the window based on at least one of the first electrical signal and the second electrical signal, wherein the electrical signal further includes the second electrical signal, wherein the second detector is preferably configured to receive diffuse reflected beams from the at least two transceiving assemblies.

6. The LiDAR according to claim 1, wherein
a number of the transceiving assemblies is at least two, and the at least two transceiving assemblies comprise a first transceiving assembly and a second transceiving assembly;
an optical emitter of the first transceiving assembly emits the outgoing beam, an optical receiver of the second transceiving assembly receives the specular reflected beam of the outgoing beam emitted by the first transceiving assembly and generates a third electrical signal, and the optical receiver of the second transceiving assembly is on the optical path of the specular reflected beam of the outgoing beam emitted by the first transceiving assembly;
the detection module includes the optical receiver of the second transceiving assembly, and the optical receiver of the second transceiving assembly is electrically connected to the control module; and
the control module is configured to determine whether there is the attachment on the window based on the third electrical signal, wherein the electrical signal further includes the third electrical signal.

7. The LiDAR according to claim 6, wherein when the at least two transceiving assemblies work in sequence, the optical receiver of the second transceiving assembly receives the specular reflected beam during a non-detection period.

8. The LiDAR according to claim 6 or 7, wherein the reflected beam further comprises a diffuse reflected beam, and the transceiving assemblies further comprise other transceiving assembly except the first transceiving assembly and the second transceiving assembly;
wherein an optical receiver of at least one another transceiving assembly is configured to receive the diffuse reflected beam of the first transceiving assembly and generate a fourth electrical signal;
wherein the detection module includes the optical receiver of the other transceiving assembly, and the optical receiver of the other transceiving assembly is electrically connected to the control module; and
wherein the control module is configured to determine whether there is the attachment on the window based on at least one of the third electrical signal and the fourth electrical signal, wherein the electrical signal further includes the fourth electrical signal.

9. The LiDAR according to claim 6, wherein
the LiDAR further comprises a light deflection module, wherein the light deflection module is on the optical path of the specular reflected beam of the outgoing beam emitted by the first transceiving assembly and is configured to adjust an optical path direction of the specular reflected beam of the outgoing beam emitted by the first transceiving assembly, so that the specular reflected beam reflected by the light deflection module transmits to the optical receiver of the second transceiving assembly.

10. A mobile device, comprising the LiDAR according to any one of claims 1 to 9.

11. A LiDAR attachment detection method, applied to the LiDAR according to claim 1, wherein comprises:
obtaining the electrical signal generated by the detection module; and
if the intensity of the electrical signal and a preset threshold satisfy a preset relationship, determining that there is the attachment on the window.

12. The detection method according to claim 11, wherein the electrical signal comprises at least one of a first electrical signal, a second electrical signal, a third electrical signal and a fourth electrical signal, wherein the first electrical signal, the second electrical signal, the third electrical signal and the fourth electrical signal are different from each other.

13. The detection method according to claim 12, wherein the intensity of the electrical signal and the preset threshold satisfy the preset relationship, comprises:
the intensity of the first electrical signal is less than a first preset threshold;
the intensity of the second electrical signal is greater than a second preset threshold; or
a ratio of the first electrical signal to the second electrical signal is less than a third preset threshold.

14. The detection method according to claim 12, wherein the intensity of the electrical signal and the preset threshold satisfy the preset relationship, comprises:
the intensity of the third electrical signal is less than a fourth preset threshold;
the intensity of the fourth electrical signal is greater than a fifth preset threshold; or
a ratio of the third electrical signal to the fourth electrical signal is less than a sixth preset threshold.

15. The detection method according to claim 11, wherein the intensity of the electrical signal is at least one of a peak voltage, pulse width and an integral area.
